# EUROPEAN PATENT SPECIFICATION

(11) **EP 3 200 994 B1**
(45) Date of publication and mention of the grant of the patent: **30.01.2019**
(21) Application number: 15846943.7
(22) Date of filing: 23.09.2015
(51) Int. Cl.: B32B 17/10, B32B 27/08, B32B 7/02, B32B 27/22, B32B 27/30, B32B 27/36, B32B 27/42

(54) **MULTIPLE LAYER INTERLAYER RESISTING DEFECT FORMATION**
GEGEN DEFEKTBILDUNG RESISTENTE, MEHRSCHICHTIGE ZWISCHENSCHICHT
INTERCOUCHE À COUCHES MULTIPLES RÉSISTANTE À LA FORMATION DE DÉFAUTS

(30) Priority: 02.10.2014 US 201414505247
(43) Date of publication of application: 09.08.2017
(73) Proprietor: Solutia Inc., St. Louis, Missouri 63141 (US)
(72) Inventor: LU, Jun, East Longmeadow, MA 01028 (US)
(74) Representative: Beckmann, Claus
(86) International application number: PCT/US2015/051593
(87) International publication number: WO 2016/053701

(56) References cited:
- WO-A1-2008/128003
- WO-A1-2014/200993
- WO-A2-2009/151952
- US-A1- 2006 210 776
- US-A1- 2006 210 782
- US-A1- 2008 268 204
- US-A1- 2013 236 693

## Description

### BACKGROUND OF THE INVENTION

### FIELD OF THE INVENTION

This disclosure is related to the field of polymer interlayers for multiple layer glass panels and multiple layer glass panels having at least one polymer interlayer sheet. Specifically, this disclosure is related to the field of polymer interlayers comprising multiple thermoplastic layers which resist the formation of optical defects.

### DESCRIPTION OF RELATED ART

Multiple layer panels are generally panels comprised of two sheets of a substrate (such as, but not limited to, glass, polyester, polyacrylate, or polycarbonate) with one or more polymer interlayers sandwiched therebetween. The laminated multiple layer glass panels are commonly utilized in architectural window applications and in the windows of motor vehicles and airplanes, and in photovoltaic solar panels. The first two applications are commonly referred to as laminated safety glass. The main function of the interlayer in the laminated safety glass is to absorb energy resulting from impact or force applied to the glass, to keep the layers of glass bonded even when the force is applied and the glass is broken, and to prevent the glass from breaking up into sharp pieces. Additionally, the interlayer may also give the glass a much higher sound insulation rating, reduce UV and/or IR light transmission, and enhance the aesthetic appeal of the associated window. In regard to the photovoltaic applications, the main function of the interlayer is to encapsulate the photovoltaic solar panels which are used to generate and supply electricity in commercial and residential applications.

In order to achieve the certain property and performance characteristics for the glass panel, it has become common practice to utilize multiple layer or multilayered interlayers. As used herein, the terms "multilayer" and "multiple layers" mean an interlayer having more than one layer, and multilayer and multiple layer may be used interchangeably. Multiple layer interlayers typically contain at least one soft layer and at least one stiff layer. Interlayers with one soft "core" layer sandwiched between two more rigid or stiff "skin" layers have been designed with sound insulation properties for the glass panel. Interlayers having the reverse configuration, that is, with one stiff layer sandwiched between two more soft layers have been found to improve the impact performance of the glass panel and can also be designed for sound insulation. Examples of multiple layer interlayers also include the interlayers with at least one "clear" or non-colored layer and at least one colored layer or at least one conventional layer, e.g., non-acoustic layer, and at least one acoustic layer. Other examples of multiple layer interlayers include interlayers with at least two layers with different colors for aesthetic appeal. The colored layer typically contains pigments or dyes or some combination of pigments and dyes. The layers of the interlayer are generally produced by mixing a polymer resin such as poly(vinyl butyral) with one or more plasticizers and melt processing the mix into a sheet by any applicable process or method known to one of skill in the art, including, but not limited to, extrusion, with the layers being combined by processes such as co-extrusion and lamination. Other additional ingredients may optionally be added for various other purposes. After the interlayer sheet is formed, it is typically collected and rolled for transportation and storage and for later use in the multiple layer glass panel, as discussed below.

The following offers a simplified description of the manner in which multiple layer glass panels are generally produced in combination with the interlayers. First, at least one polymer interlayer sheet (single or multilayer) is placed between two substrates and any excess interlayer is trimmed from the edges, creating an assembly. It is not uncommon for multiple polymer interlayer sheets or a polymer interlayer sheet with multiple layers (or a combination of both) to be placed within the two substrates creating a multiple layer glass panel with multiple polymer interlayers. Then, air is removed from the assembly by an applicable process or method known to one of skill in the art; *e.g.*, through nip rollers, vacuum bag or another deairing mechanism. Additionally, the interlayer is partially press-bonded to the substrates by any method known to one of ordinary skill in the art. In a last step, in order to form a final unitary structure, this preliminary bonding is rendered more permanent by a high temperature and pressure lamination process, or any other method known to one of ordinary skill in the art such as, but not limited to, autoclaving.

Multilayer interlayers such as a trilayer interlayer having a soft core layer and two stiffer skin layers are commercially available. The stiff skin layers provide handling, processing and mechanical strength of the interlayer; the soft core layer provides acoustic damping property. Glass panels containing these multilayered acoustic interlayers can, under extreme conditions, develop defects commonly known as iceflowers (also known as snowflakes), which initiate in the presence of excessive residual, trapped air in the panels and stress in the glass. Specifically, during the manufacturing process of laminated multiple layer glass panel constructs, air and other gasses often become trapped in the interstitial spaces between the substrates and the interlayer or between the individual layers of the multilayered interlayer when these layers are stacked together to form the multilayered interlayer. As noted above, this trapped air is generally removed in the glazing or panel manufacturing process by vacuum or nip roll de-airing the construct. However, these technologies are not always effective in removing all of the air trapped in the interstitial spaces between the substrates. These pockets of air are particularly evident with mismatched glass (*e.g.*, tempered glass, heat strengthened glass, and thick, annealed glass) and in windshields, where the curvature of the glass generally results in gaps of air. These gaps of air in windshields are commonly referred to as "bending gaps." Additionally, when a bending gap is present during autoclaving, heat and pressure compress the glass to conform to the interlayer and narrow the gap, resulting in high stresses in the glass in the original gap area.

As noted above, the de-airing technologies are not always effective in removing all of the air from the glass panel assembly. As a result, there is residual air present between the glass and interlayer. During autoclaving, the residual air dissolves into the interlayer, mostly in the skin layer, under heat and pressure. The residual air located in the skin layer can move into the core layer or skin-core interphase, and it eventually partitions between skin layer and core layer to reach an equilibrium state. When a large amount of residual air (*e.g.*, excessive residual air) is present in the interlayer, air bubbles can nucleate, especially at high temperatures, as the interlayer becomes soft and is less resistant to the nucleation.

With multilayer acoustic interlayers having a soft core layer sandwiched by two stiff skin layers, e.g., the soft layer is constrained between two stiff layers, air bubbles commonly first form within the soft core layer as nucleation favors the less viscous medium. In warm to hot climates, such as during the summer season, the temperature of glass can elevate to 50°C to 100°C in the laminated glass installed on buildings and vehicles. At these elevated temperatures, forces due to stresses in glass panels or windshields exert pressure on the glass perpendicularly to their plane and in the opposite direction, pulling the glass panels away from each other in an effort to restore them to their original states. The stress reduces the resistance of the air to nucleate and expand and allows the bubble to grow within the core layer.

Bubbles can also nucleate and expand in the skin layers. Because of the relative higher stiffness of the skin layer at the temperature the bubble nucleates and expands and the larger volume of the layers, the bubble expands spherically. When the bubble further expands, it can expand into the core layer, where the expansion of the bubble becomes less resistant. Regardless of where the bubbles initially form, at elevated temperatures (*e.g.*, 50°C to 100°C), the stresses from the bending gap or glass mismatch cause the bubbles to expand in the path of least resistance in random radial directions within the core layer. As the defects continue radial expansion, branches and dendritic-like features form, and give the undesirable optical appearance of iceflowers. Additionally, the formation of iceflowers within the core layer typically leads to a separation between the layers, reducing the structural integrity of the panel.

US2006/210776 A1 discloses a wedge shaped windshield interlayer, comprising two polymer sheets, including one that is made of PVB having a glass transition temperature of less than 25°C, wherein said windshield interlayer is wedge shaped, and said PVB layer may comprise two different PVB resins' regions, whereby the difference between the first residual hydroxyl content and the second residual hydroxyl content is at least 2.0 weight percent.

Accordingly, there is a need in the art for the development of a multilayered interlayer that resists the formation of these optical defects without a reduction in other optical, mechanical, and acoustic characteristics of a conventional multilayered interlayer. More specifically, there is a need in the art for the development of multilayered interlayers having at least one soft core layer that resists air nucleation and expansion to form iceflowers.

### SUMMARY OF THE INVENTION

Because of these and other problems in the art, described herein, among other things are multilayered interlayers comprising stiff skin layers and a soft core layer(s). In an embodiment, these multilayered interlayers comprise: a first polymer layer (skin layer) comprising plasticized poly(vinyl butyral) resin; a second polymer layer (core layer) comprising a blend of two or more plasticized poly(vinyl butyral) resins having different residual hydroxyl content and wherein the plasticizer is a high refractive index plasticizer having a refractive index of at least about 1.460; and optionally, a third polymer layer (skin layer) comprising plasticized poly(vinyl butyral) resin. The second polymer layer is disposed adjacent the first polymer layer. If there are three or more layers, the second polymer layer is disposed between the first polymer layer and the third polymer layer, resulting in two skin layers and a central core layer.

In an embodiment, a polymer interlayer that resists formation of iceflower defects is disclosed, the polymer interlayer comprising: at least one soft layer wherein the soft layer comprises: a first poly(vinyl butyral) resin having a first residual hydroxyl content; a second poly(vinyl butyral) resin having a second residual hydroxyl content, wherein the difference between the first residual hydroxyl content and the second residual hydroxyl content is at least 2.0 weight percent; and a high refractive index plasticizer having a refractive index of at least about 1.460; at least one stiffer layer comprising a third poly(vinyl butyral resin) having a third residual hydroxyl content; and a plasticizer, wherein the polymer interlayer has a damping loss factor (η) (as measured by ISO 16940) of at least about 0.15, a percent haze of less than 1.0% (as measured by a hazemeter in accordance with ASTM D1003-61 (Re-approved 1977)-Procedure A using Illuminant C, at an observer angle of 2 degrees).

In embodiments, the second poly(vinyl butyral) resin is present in an amount of from about 5 weight percent to about 45 weight percent, or from about 10 weight percent to about 40 weight percent.

In embodiments, the soft layer of the polymer interlayer has at least one glass transition temperature (T_{g}) less than 15ºC. In embodiments, the polymer interlayer has at least two different glass transition temperatures (T_{g}) and the difference between the at least two different glass transition temperatures (T_{g}) is at least 3ºC.

In embodiments, the plasticizer is selected from dipropylene glycol dibenzoate, tripropylene glycol dibenzoate, polypropylene glycol dibenzoate, isodecyl benzoate, 2-ethylhexyl benzoate, diethylene glycol benzoate, butoxyethyl benzoate, butoxyethyoxyethyl benzoate, butoxyethoxyethoxyethyl benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluate, triethylene glycol di-o-toluate, dipropylene glycol di-o-toluate, 1,2-octyl dibenzoate, tri-2-ethylhexyl trimellitate, di-2-ethylhexyl terephthalate, bis-phenol A bis(2-ethylhexaonate), di-(butoxyethyl) terephthalate, di-(butoxyethyoxyethyl) terephthalate, and mixtures thereof. In embodiments, the plasticizer is a mix of two or more plasticizers. In embodiments, the interlayer further comprises a second high refractive index plasticizer having a refractive index of at least 1.460. In other embodiments, the interlayer further comprises a plasticizer having a refractive index of less than about 1.450.

In embodiments, the percent haze is less than 0.5% (as measured by ASTM D1003-61 (Re-approved 1977)-Procedure A using Illuminant C, at an observer angle of 2 degrees).

In embodiments, the residual hydroxyl content of the third poly(vinyl butyral resin) is the same as the residual hydroxyl content of the first poly(vinyl butyral resin) or the second poly(vinyl butyral resin). In embodiments, the difference between the first residual hydroxyl content and the second residual hydroxyl content is at least 4.0 weight percent, or at least 6.0 weight percent.

In another embodiment, a polymer interlayer that resists formation of iceflower defects is disclosed, the polymer interlayer comprising: at least one soft layer wherein the soft layer comprises: a first poly(vinyl butyral) resin having a first residual hydroxyl content; a second poly(vinyl butyral) resin having a second residual hydroxyl content, wherein the difference between the first residual hydroxyl content and the second residual hydroxyl content is at least 2.0 weight percent; and at least one plasticizer having a refractive index of at least 1.460 selected from dipropylene glycol dibenzoate, tripropylene glycol dibenzoate, polypropylene glycol dibenzoate, isodecyl benzoate, 2-ethylhexyl benzoate, diethylene glycol benzoate, butoxyethyl benzoate, butoxyethyoxyethyl benzoate, butoxyethoxyethoxyethyl benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluate, triethylene glycol di-o-toluate, dipropylene glycol di-o-toluate, 1,2-octyl dibenzoate, tri-2-ethylhexyl trimellitate, di-2-ethylhexyl terephthalate, bis-phenol A bis(2-ethylhexaonate), di-(butoxyethyl) terephthalate, di-(butoxyethyoxyethyl) terephthalate, and mixtures thereof; at least one stiffer layer comprising a third poly(vinyl butyral resin) having a third residual hydroxyl content; and, a plasticizer, wherein the polymer interlayer has a damping loss factor (η) (as measured by ISO 16940) of at least about 0.15, a percent haze of less than 1.0% (as measured by a hazemeter in accordance with ASTM D1003-61 (Re-approved 1977)-Procedure A using Illuminant C, at an observer angle of 2 degrees).

In embodiments, the plasticizer is a mix of two or more plasticizers. In embodiments, the interlayer further comprises a second high refractive index plasticizer having a refractive index of at least 1.460.

In embodiments, the second poly(vinyl butyral) resin is present in an amount of from about 5 weight percent to about 45 weight percent, or from about 10 weight percent to about 40 weight percent.

In embodiments, the percent haze is less than 0.5% (as measured by ASTM D1003-61 (Re-approved 1977)-Procedure A using Illuminant C, at an observer angle of 2 degrees). In embodiments, the polymer interlayer has at least two different glass transition temperatures (T_{g}) and the difference between at least two different glass transition temperatures (T_{g}) is at least 5ºC.

In embodiments, the residual hydroxyl content of the third poly(vinyl butyral resin) is the same as the residual hydroxyl content of the first poly(vinyl butyral resin) or the second poly(vinyl butyral resin). In embodiments, the difference between the first residual hydroxyl content and the second residual hydroxyl content is at least 4.0 weight percent, or at least 6.0 weight percent.

In an embodiment, a polymer interlayer that resists formation of iceflower defects is disclosed, the polymer interlayer comprising: at least one soft layer wherein the soft layer comprises: a first poly(vinyl butyral) resin having a first residual hydroxyl content; a second poly(vinyl butyral) resin having a second residual hydroxyl content, wherein the difference between the first residual hydroxyl content and the second residual hydroxyl content is at least 2.0 weight percent; and a high refractive index plasticizer having a refractive index of at least about 1.460; at least one stiffer layer comprising a third poly(vinyl butyral resin) having a third residual hydroxyl content; and a plasticizer, wherein the polymer interlayer has a damping Loss Factor (η) (as measured by ISO 16940) of at least about 0.15, a percent haze of less than 1.0% (as measured by a hazemeter in accordance with ASTM D1003-61 (Re-approved 1977)-Procedure A using Illuminant C, at an observer angle of 2 degrees) and wherein the polymer interlayer resists iceflower defect formation, and wherein the second poly(vinyl butyral) resin is present in an amount of from about 5 weight percent to about 45 weight percent.

In embodiments, the interlayer further comprises a second plasticizer, wherein the second plasticizer has a refractive index of less than about 1.450. In embodiments, the second poly(vinyl butyral) resin is present in an amount of from about 10 weight percent to about 40 weight percent.

A multiple layer panel is also disclosed. The multiple layer panel comprises at least one rigid substrate, and a polymer interlayer or multiple layer polymer interlayer as disclosed herein. The panel has improved optical properties.

A method of making a polymer interlayer is also disclosed, wherein the multilayer interlayer comprises a polymer interlayer that resists formation of iceflower defects is disclosed, the polymer interlayer comprising: at least one soft layer wherein the soft layer comprises: a first poly(vinyl butyral) resin having a first residual hydroxyl content; a second poly(vinyl butyral) resin having a second residual hydroxyl content, wherein the difference between the first residual hydroxyl content and the second residual hydroxyl content is at least 2.0 weight percent; and a high refractive index plasticizer having a refractive index of at least about 1.460; at least one stiffer layer comprising a third poly(vinyl butyral resin) having a third residual hydroxyl content; and a plasticizer, wherein the polymer interlayer has improved properties, as disclosed herein.

In certain embodiments, the rigid substrate (or substrates) is glass.

### DESCRIPTION OF THE PREFERRED EMBODIMENT(S)

Described herein, among other things, are multilayer interlayers comprised of at least one soft core layer, at least one stiff skin layer, and a high refractive index plasticizer, and wherein the soft core layer comprises a mixture of at least a first resin and a second resin, wherein the residual hydroxyl content (measured as %PVOH by weight) in the second resin is higher than that in the first resin (or stated differently, where the two resins have different residual hydroxyl contents). The interlayers of present disclosure resist or eliminate iceflower defect formation.

Also described are multiple layer glass panels comprising the interlayers. Mixing two or more resins having different levels of residual hydroxyl content and a high refractive index plasticizer to form the core layer of the multilayer interlayer, or in other words, adding a second resin (having a different or higher residual hydroxyl content) to the first resin to form the core layer of the multilayer interlayer, improves the resistance of the core layer to bubble nucleation and expansion, which is inherently weak in the conventional multilayered interlayers, thereby effectively reducing or eliminating the iceflower optical defects common with the conventional multilayered interlayer without sacrificing other favorable/desired characteristics of conventional multilayered interlayers such as sound insulation, optical properties, and mechanical strength of the glass panels made with the multilayered interlayers. The multilayered interlayers also have excellent clarity (or very low haze). The multilayer interlayers of the present invention can be used in multiple layer glass applications, such as safety glass in windshields, side windows, and roof and architectural windows.

Conventional multilayer interlayers such as a trilayer acoustic interlayer contain a soft core layer consisting of a single poly(vinyl butyral) ("PVB") resin having a low residual hydroxyl content and a high amount of a conventional plasticizer, and two stiff skin layers having significantly higher residual hydroxyl content (see, for example U.S. Patents 5,340,654, 5,190,826, and 7,510,771). The residual hydroxyl content in the PVB core resin and the amount of the plasticizer are optimized such that the interlayer provides optimal sound insulation property under ambient conditions for multiple layer glass panels such as windshields and windows installed on vehicles and buildings. Because of the low residual hydroxyl content of the resin and high level of plasticization, the core layer is soft or has weak mechanical strength and is highly susceptible to iceflower defect formation. Surprisingly, it has been discovered that adding a second PVB resin (having a different or higher residual hydroxyl content than the first PVB resin) to the core layer results in a multiple layer interlayer that reduces or eliminates iceflower defect formation while maintaining the sound insulation property of the conventional multilayered acoustic interlayer. The addition of a high refractive index plasticizer (having a refractive index of at least about 1.460) results in a multilayered interlayer having excellent clarity and low haze. The second PVB resin has a residual hydroxyl content that is at least about 2 wt.% higher (or different) than the residual hydroxyl content of the first PVB resin, or at least about 4 wt.% higher, or at least about 6 wt.% higher, or at least about 8 wt.% higher, or at least about 10 wt.% higher, or at least about 12 wt.% higher, or at least about 14 wt.% higher than the residual hydroxyl content of the first PVB resin. Either resin may be designated as the "first" or "second" PVB resin. If the first PVB resin has a relatively higher residual hydroxyl content, then the residual hydroxyl content of the second PVB resin will be at least about 2 wt.% lower than the residual hydroxyl content of the first PVB resin. Stated differently, it is important that the difference between the residual hydroxyl content of the two resins is at least about 2 wt.%, or at least about 4 wt.%, or at least about 6 wt.%, or at least about 8 wt.%, or at least about 10 wt.%, or at least about 12 wt.%, or at least about 14 wt.%.

To modify the conventional multilayer acoustic interlayer according to present disclosure, the first polymer resin in the core layer is selected to provide optimal sound insulation properties and the second polymer resin is selected to provide strength to the core layer to resist iceflower defect formation. Because the plasticizer will generally partition such that there is more plasticizer in the PVB resin having lower residual hydroxyl content and less plasticizer in the PVB resin having higher residual hydroxyl content, the total amount of plasticizer required for the core layer can be reduced accordingly without changing the amount of the plasticizer necessary to plasticize the first resin and to provide the desired sound insulation properties. Consequently, the core layer will exhibit two different glass transition temperatures, with one corresponding to the plasticized first resin (which is the same as the glass transition temperature the core layer of the conventional multilayer interlayer), and the second, higher glass transition temperature corresponding to the plasticized second resin. As a result, the core layer in the multilayer acoustic interlayer is now stronger than that in the conventional multiplayer acoustic interlayer due to the addition of a second polymer resin of higher residual hydroxyl content and reduced overall plasticizer content in the core layer (such that there is a difference between the residual hydroxyl contents of the two resins of at least 2 wt.%).

In forming the core layer having at least two polymer resins having different residual hydroxyl content and a conventional plasticizer, or stated differently, when adding a second polymer resin to the first polymer resin to form a core layer, wherein the second polymer resin has a different (higher) residual hydroxyl content than the first polymer resin, the inventor has found that the multilayer polymer interlayer comprising the soft core layer having multiple resins of different residual hydroxyl contents can lead to undesirable haze and a reduced level of transparency or optical clarity in the multilayer polymer interlayer. The inventor further discovered that the haze will increase 1) as the difference in residual hydroxyl content between the two resins increases, 2) as the amount of the second resin relative to the first resin increases, 3) with increasing amounts of plasticizer in the interlayer, and 4) as the thickness of the interlayer is increased (or conversely the haze will decrease as the thickness of the interlayer decreases). The high haze or low clarity is caused by the differences in the polymers and plasticizers that are blended or mixed together, which causes the light to scatter in the blend or mixture when there is a sufficiently large difference in the refractive index between the polymers and/or between the polymers and plasticizers, which can result in light being refracted in different directions. Both high haze and low light transmittance are undesirable in many multilayer glass laminate panels, such as a windshield or a window glass panel. Unexpectedly, these high levels of haze can be reduced and low light transmittance can be increased to acceptable levels by the use of a high refractive index plasticizer. The high refractive index plasticizer minimizes the difference in refractive indices between the domains of plasticized PVB resin having higher residual hydroxyl content and plasticized PVB resin having lower residual hydroxyl content, thereby reducing and minimizing the formation of haze. The polymer interlayer can also be made transparent by selecting a mixture of plasticizers having at least one high refractive index plasticizer. Thus, in some embodiments, the use of a blend of resins having different residual hydroxyl contents in the core layer in combination with at least one high refractive index plasticizer creates a multilayer interlayer having acoustic properties that also resists iceflower defect formation, as well as increased light transmittance and low haze without sacrificing other important and desirable characteristics. In this regard, the plasticizer or combination of plasticizers, when selected to have a certain refractive index compared to any other plasticizer present as well as the resin and other additives, results in an interlayer having excellent optical properties as measured by at least light transmission and haze.

Multilayer acoustic interlayers such as a trilayer can now be designed by: (1) mixing a second polymer resin of higher residual hydroxyl content with a first polymer resin having lower hydroxyl content in the core layer, (2) selecting a plasticizer or a mixture of plasticizers that can minimize or eliminate haze and increase clarity, (3) reducing the overall core layer plasticizer content, (4) maintaining plasticizer equilibrium between the core layer and two skin layers and between the first resin and the second resin within the core layer, and (5) combining the core layer and skin layers to form multilayer interlayers by applicable processes such as co-extrusion or lamination. The resultant multilayer acoustic interlayer reduces or eliminates iceflower defect formation and provides excellent clarity without sacrificing other favorable and desired characteristics of conventional multilayered interlayers, for example, sound insulation properties, optical properties, and mechanical strength of the glass panels made with the multilayered acoustic interlayer.

Prior to discussing the addition of the specific second polymer resin to the core layer to produce the improved interlayer that resists iceflower defect formation, some terminology as well as common components found in an interlayer, both generally and in interlayers of the present disclosure, and the formation thereof, will be discussed. The terms "polymer interlayer sheet," "interlayer," and "polymer melt sheet" as used herein, generally may designate a single-layer sheet or a multilayered interlayer. A "single-layer sheet," as the name implies, is a single polymer layer extruded as one layer. A multilayered interlayer, on the other hand, may comprise multiple layers, including separately extruded layers, co-extruded layers, or any combination of separately and co-extruded layers. Thus the multilayered interlayer could comprise, for example: two or more single-layer sheets combined together ("plural-layer sheet"); two or more layers co-extruded together ("co-extruded sheet"); two or more co-extruded sheets combined together; a combination of at least one single-layer sheet and at least one co-extruded sheet; a combination of a single-layer sheet and a plural-layer sheet; and a combination of at least one plural-layer sheet and at least one co-extruded sheet. In various embodiments of the present disclosure, a multilayered interlayer comprises at least two polymer layers (*e.g.*, a single layer or multiple layers co-extruded and/or laminated together) disposed in direct contact with each other, wherein each layer comprises a polymer resin, as detailed more fully below. As used herein for multilayer interlayers having at least three layers, "skin layer" generally refers to the outer layers of the interlayer and "core layer" generally refers to the inner layer(s). Thus, one exemplary embodiment would be: skin layer // core layer // skin layer.

The PVB resin is produced by known acetalization processes by reacting polyvinyl alcohol ("PVOH") with butyraldehyde in the presence of an acid catalyst, separation, stabilization, and drying of the resin. Such acetalization processes are disclosed, for example, in U.S. Pat. Nos. 2,282,057 and 2,282,026 and Vinyl Acetal Polymers, in Encyclopedia of Polymer Science & Technology, 3rd edition, Volume 8, pages 381-399, by B.E. Wade (2003), the entire disclosures of which are incorporated herein by reference. The resin is commercially available in various forms, for example, as Butvar® Resin from Solutia Inc., a wholly owned subsidiary of Eastman Chemical Company.

As used herein, residual hydroxyl content (calculated as %vinyl alcohol or %PVOH by weight) in PVB refers to the amount of hydroxyl groups remaining on the polymer chains after processing is complete. For example, PVB can be manufactured by hydrolyzing poly(vinyl acetate) to poly(vinyl alcohol (PVOH), and then reacting the PVOH with butyraldehyde. In the process of hydrolyzing the poly(vinyl acetate), typically not all of the acetate side groups are converted to hydroxyl groups. Further, reaction with butyraldehyde typically will not result in all hydroxyl groups being converted to acetal groups. Consequently, in any finished PVB resin, there typically will be residual acetate groups (as vinyl acetate groups) and residual hydroxyl groups (as vinyl hydroxyl groups) as side groups on the polymer chain. As used herein, residual hydroxyl content and residual acetate content is measured on a weight percent (wt.%) basis per ASTM D1396.

In various embodiments, the first PVB resin comprises about 7 to about 16 weight percent (wt.%) hydroxyl groups calculated as %PVOH, about 7 to about 14 wt.%, about 9 to about 14 wt.%, and for certain embodiment, about 11 to about 13 wt.% hydroxyl groups calculated as %PVOH. The resin can also comprise less than 30 wt.% residual ester groups, less than 25 wt.% residual ester groups, less than 20 wt.%, less than 15 wt.%, less than 13 wt.%, less than 10 wt.%, less than 7 wt.%, less than 5 wt.%, or less than 1 wt.% residual ester groups calculated as polyvinyl ester, *e.g.*, acetate, with the balance being an acetal, such as butyraldehyde acetal, but optionally being other acetal groups, such as an isobutyraldehyde acetal group, or a 2-ethyl hexanal acetal group, or a mix of any two of butyraldehyde acetal, isobutyraldehyde, and 2-ethyl hexanal acetal groups. The second resin comprises about 9 to about 35 wt.%, about 12 to about 35 wt.%, about 15 to about 25 wt.%, and for certain embodiments, about 16 to about 22 wt.% hydroxyl groups calculated as %PVOH. The resin can also comprise less than 30 wt.% residual ester groups, less than 25 wt.% residual ester groups, less than 20 wt.%, less than 15 wt.%, less than 13 wt.%, less than 10 wt.%, less than 7 wt.%, less than 5 wt.%, or less than 1 wt.% residual ester groups calculated as polyvinyl ester, e.g., acetate, with the balance being an acetal, such as butyraldehyde acetal, but optionally being other acetal groups, such as an isobutyraldehyde acetal group, a 2-ethyl hexanal acetal group, or a mix of any two of butyraldehyde acetal, isobutyraldehyde acetal, and 2-ethyl hexanal acetal groups. The second resin is selected such that the resin has a residual hydroxyl content that is at least about 2 wt.% higher (or different) than the residual hydroxyl content of the first PVB resin, or at least about 4 wt.% higher, or at least about 6 wt.% higher, or at least about 8 wt.% higher, or at least about 10 wt.% higher, or at least about 12 wt.% higher, or at least about 14 wt.% higher than the residual hydroxyl content of the first PVB resin. This difference between the first resin and the second resin is calculated by subtracting the residual hydroxyl content of the first resin with the lower residual hydroxyl content from the residual hydroxyl content of the second resin with the greater residual hydroxyl content. For example, if a first resin has a residual hydroxyl content of 12 wt.%, and a second polymer sheet has a residual hydroxyl content of 15 wt.%, then the residual hydroxyl contents of the two resins differ by 3 wt.%, or the residual hydroxyl content in the second resin is 3 wt.% higher than the residual hydroxyl content in the first resin.

In various embodiments, where the interlayer is a multilayer interlayer such as a trilayer, the residual hydroxyl contents of the PVB resins used in the stiff (or skin) layer(s) is at least 2 wt.%, or at least 4 wt.%, or at least 6 wt.%, or at least 8 wt.%, or at least by 10 wt.% greater than the residual hydroxyl content of the first resin in the core layer, and the resin in the skin layer can comprise about 15 to about 35 wt.%, about 15 to about 30 wt.%, or about 17 to about 22 wt.%; and, for certain embodiments, about 17.25 to about 22.25 wt.% residual hydroxyl groups calculated as %PVOH. In various embodiments, the residual hydroxyl content of the second resin in the core layer can be the same as, greater than or less than the residual hydroxyl content of the resin in the skin layer. In various embodiments, the first resin, the second resin for the core layer, or the resin for the stiff layer(s), or any two of these resins, or all of the resins can also comprise less than 30 wt.% residual ester groups, less than 25 wt.% residual ester groups, less than 20 wt.%, less than 15 wt.%, less than 13 wt.%, less than 10 wt.%, less than 7 wt.%, less than 5 wt.%, or less than 1 wt.% residual ester groups calculated as polyvinyl ester, *e.g.*, acetate, with the balance being an acetal, such as butyraldehyde acetal, but optionally being other acetal groups, such as an isobutyraldehyde acetal group, a 2-ethyl hexanal acetal group, or a mix of any two of butyraldehyde acetal, isobutyraldehyde acetal, and 2-ethyl hexanal acetal groups, as previously discussed.

The amount of the second resin relative to the first resin can vary from 1 to 99 wt.%, 5 to 95 wt.%, 10 to 90 wt.%, 15 to 85 wt.%, 20 to 80 wt.%, 25 to 75 wt.%, or about 50 wt.% in the core layer. In certain embodiments, the amount of the second resin varies from about 5 to about 45 wt.%, in other embodiments, the second resin varies from 10 to 45 wt.%, or from about 10 to about 40 wt.%, or from about 10 to about 35 wt.%. In particularly useful embodiments, the second resin varies from about 10 to about 40 wt.% in the core layer.

The PVB resin (or resins) of the present disclosure typically has a molecular weight of greater than 50,000 Daltons, or less than 500,000 Daltons, or about 50,000 to about 500,000 Daltons, or about 70,000 to about 500,000 Daltons, or about 100,000 to about 425,000 Daltons, as measured by size exclusion chromatography using low angle laser light scattering. As used herein, the term "molecular weight" means the weight average molecular weight.

Various adhesion control agents ("ACAs") can be used in the interlayers of the present disclosure to control the adhesion of the interlayer sheet to glass. In various embodiments of interlayers of the present disclosure, the interlayer can comprise about 0.003 to about 0.15 parts ACAs per 100 parts resin; about 0.01 to about 0.10 parts ACAs per 100 parts resin; and about 0.01 to about 0.04 parts ACAs per 100 parts resin. Such ACAs, include, but are not limited to, the ACAs disclosed in U.S. Patent No. 5,728,472 (the entire disclosure of which is incorporated herein by reference), residual sodium acetate, potassium acetate, magnesium bis(2-ethyl butyrate), and/or magnesium bis(2-ethylhexanoate).

Other additives may be incorporated into the interlayer to enhance its performance in a final product and impart certain additional properties to the interlayer. Such additives include, but are not limited to, dyes, pigments, stabilizers (*e.g.*, ultraviolet stabilizers), antioxidants, anti-blocking agents, flame retardants, IR absorbers or blockers (*e.g.*, indium tin oxide, antimony tin oxide, lanthanum hexaboride (LaB₆) and cesium tungsten oxide), processing aides, flow enhancing additives, lubricants, impact modifiers, nucleating agents, thermal stabilizers, UV absorbers, dispersants, surfactants, chelating agents, coupling agents, adhesives, primers, reinforcement additives, and fillers, among other additives known to those of ordinary skill in the art.

The plasticizers or mixture of plasticizers in the skin and core layers are selected such that the multilayer acoustic interlayer exhibits acceptable levels of haze and visual transmittance. In various embodiments, the plasticizer is selected from high refractive index plasticizers, a mixture of two or more high refractive index plasticizers, or a mixture of conventional and high refractive index plasticizers. In various embodiments, the high refractive index plasticizer(s) is selected to eliminate potential high haze arising from blending two or more resins of different residual hydroxyl content. For example, in a blend containing 90 parts of a first PVB resin having 11 wt.% residual hydroxyl content, 10 parts of a second resin having 21 wt.% residual hydroxyl content, and 71 parts of triethylene glycol di-(2-ethylhexanoate) ("3GEH") conventional plasticizer (Refractive index = 1.442 at 25°C), the haze is 85% (as measured by a hazemeter, such as Model D25 available from Hunter Associates (Reston, VA), and in accordance with ASTM D1003-61 (Re-approved 1977)-Procedure A using Illuminant C, at an observer angle of 2 degrees). The haze is reduced to 1.9% when 3GEH is replaced by a high refractive index plasticizer blend (10:34 wt/wt blend of 3GEH and Benzoflex™ 2088) having a refractive index of 1.513. The haze is further reduced to less than 1% when the refractive index of the plasticizer is increased to 1.524 or higher. In various embodiments of the present disclosure, haze is less than 5%, less than 3%, and less than 1%.

As used herein, plasticizer having a refractive index of about 1.450 or less is referred to as a "conventional plasticizer". Conventional plasticizers include, but are not limited to, triethylene glycol di-(2-ethylhexanoate) ("3GEH"), triethylene glycol di-(2-ethylbutyrate), triethylene glycol diheptanoate, tetraethylene glycol diheptanoate, tetraethylene glycol di-(2-ethylhexanoate), dihexyl adipate, dioctyl adipate, hexyl cyclohexyladipate, diisononyl adipate, heptylnonyl adipate, di(butoxyethyl) adipate, and bis(2-(2-butoxyethoxy)ethyl) adipate, dibutyl sebacate, dioctyl sebacate, and mixtures thereof. These plasticizers have refractive indices of about 1.442 to about 1.449. In comparison, PVB resin has a refractive index of approximately 1.485 to 1.495. 3GEH (refractive index = 1.442) is the most common plasticizer present in interlayers manufactured for various properties and applications.

In various embodiments, the high refractive index plasticizer(s) is selected such that the refractive index of the plasticizer is at least about 1.460, or greater than about 1.460, or greater than about 1.470, or greater than about 1.480, or greater than about 1.490, or greater than about 1.500, or greater than 1.510, or greater than 1.520, for both the core and skin layers. As used herein, a "high refractive index plasticizer" is a plasticizer having a refractive index of at least about 1.460. In some embodiments, the high refractive index plasticizer(s) is used in conjunction with a conventional plasticizer, and in some embodiments, if included, the conventional plasticizer is triethylene glycol di-(2-ethylhexanoate) ("3GEH"), and the refractive index of the plasticizer mixture is at least 1.460. As used herein, the refractive index (also known as index of refraction) of a plasticizer or a resin used in the entirety of this disclosure is either measured in accordance with ASTM D542 at a wavelength of 589 nm and 25°C or reported in literature in accordance with the ASTM D542.

Examples of plasticizers having a high refractive index that may be used include, but are not limited to, polyadipates (RI of about 1.460 to about 1.485); epoxides (RI of about 1.460 to about 1.480); phthalates and terephthalates (RI of about 1.480 to about 1.540); benzoates (RI of about 1.480 to about 1.550); and other specialty plasticizers (RI of about 1.490 to about 1.520). Examples of high refractive index plasticizers include, but are not limited to, esters of a polybasic acid or a polyhydric alcohol, polyadipates, epoxides, phthalates, terephthalates, benzoates, toluates, mellitates and other specialty plasticizers, among others. Examples of suitable high refractive index plasticizers include, but are not limited to, dipropylene glycol dibenzoate, tripropylene glycol dibenzoate, polypropylene glycol dibenzoate, isodecyl benzoate, 2-ethylhexyl benzoate, diethylene glycol benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluate, triethylene glycol di-o-toluate, dipropylene glycol di-o-toluate, 1,2-octyl dibenzoate, tri-2-ethylhexyl trimellitate, di-2-ethylhexyl terephthalate, bis-phenol A bis(2-ethylhexaonate), ethoxylated nonylphenol, and mixtures thereof.

In any of these embodiments, the plasticizer(s) can be any of those described above. In some embodiments, the plasticizer(s) is selected such that the delta RI between the plasticized first resin and plasticized second resin in the core layer and between the layers of the interlayer is minimized (that is, as close to 0.000 as possible), less than 0.010, or less than 0.009, or less than 0.008, or less than 0.007, or less than 0.006, or less than 0.005, or less than 0.004, or less than 0.003, or less than 0.002, or less than 0.001, or about 0.000. In other embodiments, the plasticizer is selected such that the delta RI between the resins and plasticizer is less than 0.075, or less than 0.070, or less than about 0.065, or less than 0.060, or less than 0.055, or less than 0.050, or less than 0.040, or less than 0.030, or less than 0.020, or less than 0.010, or about 0.000.

In various embodiments of interlayers of the present disclosure, the interlayer comprises greater than 5 phr, about 5 to about 120 phr, about 10 to about 90 phr, about 20 to about 70 phr, about 30 to about 60 phr, or less than 120 phr, or less than 90 phr, or less than 60 phr, or less than 40 phr, or less than 30 phr total plasticizer. While the total plasticizer content is indicated above, the plasticizer content in the skin layer(s) or core layer(s) can be different from the total plasticizer content. In addition, the skin layer(s) and core layer(s) can have different plasticizer types and plasticizer contents, in the ranges previously discussed, as each respective layer's plasticizer content at the equilibrium state is determined by the layer's respective residual hydroxyl contents, as disclosed in U.S. Patent No. 7,510,771 (the entire disclosure of which is incorporated herein by reference). For example, at equilibrium the interlayer could comprise two skin layers, each with 30 phr plasticizer, and a core layer with 65 phr plasticizer, for a total plasticizer amount for the interlayer of about 45.4 phr when the combined skin layer thickness equals that of the core layer. For thicker or thinner skin layers, the total plasticizer amount for the interlayer would change accordingly. In various embodiments of the present invention, the plasticizer content of the core layer and skin layer differs by at least 8 phr, or at least 9 phr, or at least 10 phr, or at least 12 phr, or at least 13 phr, or at least 14 phr, or at least 15 phr, or at least 16 phr, or at least 17 phr, or at least 18 phr, or at least 19 phr, or at least 20 phr, or at least 25 phr or more. As used herein, the amount of plasticizer, or any other component in the interlayer, can be measured as parts per hundred parts resin (phr), on a weight per weight basis. For example, if 30 grams of plasticizer is added to 100 grams of polymer resin, then the plasticizer content of the resulting plasticized polymer would be 30 phr. As used herein, when the plasticizer content of the interlayer is given, the plasticizer content is determined with reference to the phr of the plasticizer in the mix or melt that was used to produce the interlayer.

The amount of plasticizer in the interlayer can be adjusted to affect the glass transition temperature (T_{g}). The glass transition temperature (T_{g}) is the temperature that marks the transition from the glassy state of the interlayer to the rubbery state. In general, higher amounts of plasticizer loading will result in lower T_{g}. Conventional, previously utilized interlayers generally have had a T_{g} in the range of about -10 to 25°C for acoustic (noise reducing) interlayers, and up to about 45°C for hurricane and aircraft (stiffer or structural) interlayer applications.

In various embodiments, the core layer of the interlayers of the present disclosure has multiple glass transition temperatures. For example, the T_{g} of the first plasticized resin may be about -40°C to about 15°C, or about 15°C or less, or about 10°C or less, or about -20°C to 10°C, and the T_{g} of the second plasticized resin may be about 0 to 45°C, about 0°C or greater, about 5°C or greater, about 10°C or greater, about 15°C or greater, or in certain embodiments, about 15 to about 40°C, or about 45°C or less, or about 40°C or less, or about 35°C or less. In various embodiment, the T_{g} of the second plasticized resin is at least about 3°C greater than the T_{g} of the first plasticized resin, or about 4°C greater, or about 5°C greater, or about 6°C greater, or about 7°C greater, or about 8°C greater, or about 9°C greater, or about 10°C greater, or about 15°C greater, or about 25°C greater, or about 35°C greater than the T_{g} of the first plasticized resin, and for certain embodiments, about 16°C to about 35°C greater than the T_{g} of the first plasticized resin. In some embodiments, the glass transition of the second plasticized resin may be obscured by the glass transition of the first plasticized resin such that it does not exhibit a distinctive glass transition temperature. The T_{g} of the second plasticized resin in the core layer is determined from the T_{g} of the plasticized second resin prior to mixing with the first resin.

The final interlayer, whether formed from extrusion or co-extrusion, generally has a random rough surface topography as it is formed through melt fractures of polymer melt as it exits the extrusion die and may additionally be embossed over the random rough surface on one or both sides (*e.g.*, the skin layers) by any method of embossment known to one of ordinary skill in the art.

While all methods for the production of polymer interlayer sheets known to one of ordinary skill in the art are contemplated as possible methods for producing the polymer interlayer sheets described herein, this application will focus on polymer interlayer sheets produced through the extrusion and co-extrusion processes. The final multiple layer glass panel laminate of the present invention are formed using lamination processes known in the art.

Generally, the thickness, or gauge, of the polymer interlayer sheet will be in a range from about 15 mils to 100 mils (about 0.38 mm to about 2.54 mm), about 15 mils to 60 mils (about 0.38 mm to about 1.52 mm), about 20 mils to about 50 mils (about 0.51 to 1.27 mm), and about 15 mils to about 35 mils (about 0.38 to about 0.89 mm). In various embodiments, each of the layers, such as the skin and core layers, of the multilayer interlayer may have a thickness of about 1 mil to 99 mils (about 0.025 to 2.51 mm), about 1 mil to 59 mils (about 0.025 to 1.50 mm), 1 mil to about 29 mils (about 0.025 to 0.74 mm), or about 2 mils to about 28 mils (about 0.05 to 0.71 mm).

Although the embodiments described below refer to the polymer resin as being PVB, it would be understood by one of ordinary skill in the art that the polymer may be any polymer suitable for use in a multiple layer panel. Typical polymers include, but are not limited to, polyvinyl acetals (PVA) (such as poly(vinyl butyral) (PVB) or isomeric poly(vinyl isobutyral) (PVisoB), polyurethane (PU), poly(ethylene-co-vinyl acetate) (EVA), polyvinylchloride (PVC), poly(vinylchloride-co-methacrylate), polyethylenes, polyolefins, ethylene acrylate ester copolymers, poly(ethylene-co-butyl acrylate), silicone elastomers, epoxy resins, and acid copolymers such as ethylene/carboxylic acid copolymers and its ionomers, derived from any of the foregoing possible thermoplastic resins, combinations of the foregoing, and the like. PVB and its isomeric polymer PVisoB, polyvinyl chloride, and polyurethane are particularly useful polymers generally for interlayers; PVB (and its isomeric polymer) is particularly preferred. For example, the multilayered interlayer can consist of PVB//PVisoB//PVB. Other example includes PVB//PVC//PVB or PVB//PU//PVB. Further examples include PVC//PVB//PVC or PU//PVB//PU. Alternatively, the skin and core layers may all be PVB using the same or different starting PVB resins.

As used herein, a multiple layer panel can comprise a single substrate, such as glass, acrylic, or polycarbonate with a polymer interlayer sheet disposed thereon, and most commonly, with a polymer film further disposed over the polymer interlayer. The combination of polymer interlayer sheet and polymer film is commonly referred to in the art as a bilayer. A typical multiple layer panel with a bilayer construct is: (glass) // (polymer interlayer sheet) // (polymer film), where the polymer interlayer sheet can comprise multiple interlayers, as noted above. The polymer film supplies a smooth, thin, rigid substrate that affords better optical character than that usually obtained with a polymer interlayer sheet alone and functions as a performance enhancing layer. Polymer films differ from polymer interlayer sheets, as used herein, in that polymer films do not themselves provide the necessary penetration resistance and glass retention properties, but rather provide performance improvements, such as infrared absorption characteristics. Poly(ethylene terephthalate) ("PET") is the most commonly used polymer film. Generally, as used herein, a polymer film is thinner than a polymer sheet, such as from about 0.001 to 0.2 mm thick.

The interlayers of the present disclosure will most commonly be utilized in multiple layer panels comprising two substrates, such as a pair of glass sheets (or other rigid materials, such as polycarbonate or acrylic, known in the art), with the interlayers disposed between the two substrates. An example of such a construct would be: (glass) // (polymer interlayer sheet) // (glass), where the polymer interlayer sheet can comprise multilayered interlayers, as noted above, and wherein the core layer of the multilayer interlayer comprises a first resin and a second resin having higher residual hydroxyl content and at least one high refractive index plasticizer such that a transparent multiple layer panel (having high %Tᵥᵢₛ) that resists iceflower defect formation is created, and the clarity of the multiple layer panel is excellent (having minimal haze). These examples of multiple layer panels are in no way meant to be limiting, as one of ordinary skill in the art would readily recognize that numerous constructs other than those described above could be made with the interlayers of the present disclosure.

The typical glass lamination process comprises the following steps: (1) assembly of the two substrates (*e.g.*, glass) and interlayer; (2) heating the assembly via an IR radiant or convective means for a short period; (3) passing the assembly into a pressure nip roll for the first deairing; (4) heating the assembly a second time to about 60°C to about 120°C to give the assembly enough temporary adhesion to seal the edge of the interlayer; (5) passing the assembly into a second pressure nip roll to further seal the edge of the interlayer and allow further handling; and (6) autoclaving the assembly at temperatures between 135ºC and 150ºC and pressures between 180 psig and 200 psig for about 30 to 90 minutes. The actual steps, as well as the times and temperatures, may vary as necessary, as known by one skilled in the art.

Other means for use in de-airing of the interlayer-glass interfaces (steps 2-5) known in the art and that are commercially practiced include vacuum bag and vacuum ring processes in which a vacuum is utilized to remove the air.

As previously indicated, clarity is a parameter used to describe the polymer interlayers disclosed herein. Clarity is determined by measuring the haze value or percent haze. The test for percent haze is performed with a hazemeter, such as Model D25 available from Hunter Associates (Reston, VA), and in accordance with ASTM D1003-61 (Re-approved 1977)-Procedure A using Illuminant C, at an observer angle of 2 degrees. The polymer interlayers are laminated with a pair of clear glass sheets each of 2.3 mm thick (commercially available from Pittsburgh Glass Works of Pennsylvania) and the haze values are measured. The interlayers of the present disclosure have a percent haze of less than about 5%, less than about 4%, less than about 3%, less than about 2%, less than about 1%, or less than about 0.5%.

Transparency, or percent visual transmittance (%Tᵥᵢₛ) is also used to describe the polymer interlayers disclosed herein. The transparency is also measured with a hazemeter, such as Model D25 available from Hunter Associates (Reston, VA), and in Illuminant D65, at an observer angle of 10 degrees. The polymer interlayers are laminated with a pair of clear glass sheets each of 2.3 mm thick (commercially available from Pittsburgh Glass Works of Pennsylvania) and the %Tᵥᵢₛ is measured. The polymer interlayers of the present disclosure have a %Tᵥᵢₛ of greater than 85 for the interlayers containing only additives of ACAs, UV stabilizers, and antioxidant, or greater than 80% for the interlayers containing additional additives such as pigments, IR absorbers or blockers as mentioned above. Polymer interlayers containing high levels of pigments and/or dyes may have lower %Tᵥᵢₛ values as desired, such as in mass pigmented or colored polymer interlayers.

The refractive index (RI) was measured in accordance with ASTM D542. The reported RI values were obtained at a wavelength of 589 nm and at 25°C.

The glass transition temperature (T_{g}) was determined by dynamical mechanical thermal analysis (DMTA). The DMTA measures the storage (elastic) modulus (G') in Pascals, loss (viscous) modulus (G") in Pascals, tan delta (=G"/G') of the specimen as a function of temperature at a given frequency, and temperature sweep rate. A frequency of 1 Hz and temperature sweep rate of 3°C/min were used herein. The T_{g} is then determined by the position of the tan delta peak on the temperature scale in °C.

The damping loss factor (η) was measured by Mechanical Impedance Measurement as described in ISO 16940. A laminated glass bar sample of 25 mm wide, 300 mm long, and having a pair of 2.3 mm clear glass is prepared and excited at the center point of the bar by a vibration shaker (Brüel and Kjær). An impedance head (Brüel and Kjær) is used to measure the force to excite the bar to vibrate and the velocity of the vibration and the resultant transfer function is recorded on a National Instrument data acquisition and analysis system. The loss factor at the first vibration mode is calculated using the half-power method.

"Sound transmission loss" (STL) is determined for a laminate of the present invention or comparative panel of fixed dimensions with ASTM E90 (2009) at a fixed temperature of 20 ºC. A "Reference Panel" of 2.3 mm clear glass//"Reference interlayer"//2.3 mm clear glass is measured to have a coincident frequency at 3,150 Hz and STL of 31 dB at the coincident frequency, wherein the "Reference Interlayer" is produced by mixing and melt-extruding 100 parts poly(vinyl butyral) resin having a residual hydroxyl content of 18 to 19 wt.% and a vinyl acetate residue of 2 wt.%, 38 parts by weight of 3GEH plasticizer, and other common additives (as described above). The reference interlayer has a thickness of 0.76 mm a glass transition temperature of 30ºC. The multilayer interlayers of the present invention or the comparative multilayer interlayers are laminated with 2.3 mm clear glass according to the method described above for making the reference (or test) laminated glass panel. The panel has a dimension of 50 cm by 80 cm. The STL of the test panel at the coincident frequency of the "Reference Panel", e.g., STL at 3,150Hz, is used to assess the sound insulation property of the panel. In various embodiments, the STL of the glass panel comprising the multilayer interlayer of the present invention is greater than about 35 dB, greater than about 36 dB, greater than about 37 dB, greater than about 38 dB, or greater than about 39 dB.

As previously discussed, optical defects known as iceflowers are commonly found in trilayer laminates. The formation of iceflowers in trilayer acoustic PVB laminates can be tested by simulating the real world situation in windshields and other glazings where the combination of large bending gaps and poor de-airing are known to be among the root causes for iceflower development in the field. First, a 30 cm by 30 cm trilayer interlayer with a polyethylene terephthalate (PET) film ring (with an inside diameter of 7.5 cm; an outside diameter of 14 cm; and a thickness of 0.10 mm to 0.18 mm) is placed in the center is sandwiched between two 30 cm by 30 cm pieces of 2.3 mm glass. The construct is then pre-laminated and autoclaved. The resulting laminates are allowed to condition at room temperature for 48 hours, baked in a conventional oven (at 80°C) for 48 hours, and then allowed to cool. The laminates are then visually inspected to determine the rate of iceflower formation in the laminate (*e.g.*, the percentage of laminates that developed iceflower defects) and the percentage of area within the PET ring with iceflower defects (as disclosed, for example, in U.S. Patent Application Publication 20130236693 A1, the entire disclosure of which is incorporated by reference herein). A total of ten (10) laminates is used to obtain an average value of the rate of iceflower formation for a trilayer interlayer type.

The invention also includes the following Embodiments 1 to 18, set forth below.
Embodiment 1 is a polymer interlayer that resists formation of iceflower defects, the polymer interlayer comprising: at least one soft layer wherein the soft layer comprises: a first poly(vinyl butyral) resin having a first residual hydroxyl content; a second poly(vinyl butyral) resin having a second residual hydroxyl content, wherein the difference between the first residual hydroxyl content and the second residual hydroxyl content is at least 2.0 weight percent; and a high refractive index plasticizer having a refractive index of at least about 1.460; at least one stiffer layer comprising a third poly(vinyl butyral resin) having a third residual hydroxyl content; and a plasticizer, wherein the polymer interlayer has a damping loss factor (η) (as measured by ISO 16940) of at least about 0.15, a percent haze of less than 1.0% (as measured by a hazemeter in accordance with ASTM D1003-61 (Re-approved 1977)-Procedure A using Illuminant C, at an observer angle of 2 degrees).
Embodiment 2 is a polymer interlayer that resists formation of iceflower defects, the polymer interlayer comprising: at least one soft layer wherein the soft layer comprises: a first poly(vinyl butyral) resin having a first residual hydroxyl content; a second poly(vinyl butyral) resin having a second residual hydroxyl content, wherein the difference between the first residual hydroxyl content and the second residual hydroxyl content is at least 2.0 weight percent; and at least one plasticizer having a refractive index of at least 1.460 selected from dipropylene glycol dibenzoate, tripropylene glycol dibenzoate, polypropylene glycol dibenzoate, isodecyl benzoate, 2-ethylhexyl benzoate, diethylene glycol benzoate, butoxyethyl benzoate, butoxyethyoxyethyl benzoate, butoxyethoxyethoxyethyl benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluate, triethylene glycol di-o-toluate, dipropylene glycol di-o-toluate, 1,2-octyl dibenzoate, tri-2-ethylhexyl trimellitate, di-2-ethylhexyl terephthalate, bis-phenol A bis(2-ethylhexaonate), di-(butoxyethyl) terephthalate, di-(butoxyethyoxyethyl) terephthalate, and mixtures thereof; at least one stiffer layer comprising a third poly(vinyl butyral resin) having a third residual hydroxyl content; and a plasticizer, wherein the polymer interlayer has a damping loss factor (η) (as measured by ISO 16940) of at least about 0.15, a percent haze of less than 1.0% (as measured by a hazemeter in accordance with ASTM D1003-61 (Re-approved 1977)-Procedure A using Illuminant C, at an observer angle of 2 degrees).
Embodiment 3 is a polymer interlayer including any of the features of embodiments 1 to 2, wherein the second poly(vinyl butyral) resin is present in an amount of from about 5 weight percent to about 45 weight percent.
Embodiment 4 is a polymer interlayer that resists formation of iceflower defects, the polymer interlayer comprising: at least one soft layer wherein the soft layer comprises: a first poly(vinyl butyral) resin having a first residual hydroxyl content; a second poly(vinyl butyral) resin having a second residual hydroxyl content, wherein the difference between the first residual hydroxyl content and the second residual hydroxyl content is at least 2.0 weight percent; and a high refractive index plasticizer having a refractive index of at least about 1.460; at least one stiffer layer comprising a third poly(vinyl butyral resin) having a third residual hydroxyl content; and a plasticizer, wherein the polymer interlayer has a damping Loss Factor (η) (as measured by ISO 16940) of at least about 0.15, a percent haze of less than 1.0% (as measured by a hazemeter in accordance with ASTM D1003-61 (Re-approved 1977)-Procedure A using Illuminant C, at an observer angle of 2 degrees), and wherein the second poly(vinyl butyral) resin is present in in amount of from about 5 weight percent to about 45 weight percent.
Embodiment 5 is a polymer interlayer including any of the features of embodiments 1 to 4, wherein the second poly(vinyl butyral) resin is present in an amount of from about 10 weight percent to about 40 weight percent.
Embodiment 6 is a polymer interlayer including any of the features of embodiments 1 to 5, wherein the soft layer of the polymer interlayer has at least one glass transition temperature (T_{g}) less than 15ºC.
Embodiment 7 is a polymer interlayer including any of the features of embodiments 1 or 4, wherein the plasticizer is selected from dipropylene glycol dibenzoate, tripropylene glycol dibenzoate, polypropylene glycol dibenzoate, isodecyl benzoate, 2-ethylhexyl benzoate, diethylene glycol benzoate, butoxyethyl benzoate, butoxyethyoxyethyl benzoate, butoxyethoxyethoxyethyl benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluate, triethylene glycol di-o-toluate, dipropylene glycol di-o-toluate, 1,2-octyl dibenzoate, tri-2-ethylhexyl trimellitate, di-2-ethylhexyl terephthalate, bis-phenol A bis(2-ethylhexaonate), di-(butoxyethyl) terephthalate, di-(butoxyethyoxyethyl) terephthalate, and mixtures thereof.
Embodiment 8 is a polymer interlayer including any of the features of embodiments 1 to 7, wherein the plasticizer is a mix of two or more plasticizers.
Embodiment 9 is a polymer interlayer including any of the features of embodiments 1 to 8, further comprising a second high refractive index plasticizer having a refractive index of at least 1.460.
Embodiment 10 is a polymer interlayer including any of the features of embodiments 1 to 9, wherein the polymer interlayer further comprises a plasticizer having a refractive index of less than about 1.450.
Embodiment 11 is a polymer interlayer including any of the features of embodiments 1 to 10, wherein the percent haze is less than 0.5% (as measured by ASTM D1003-61 (Re-approved 1977)-Procedure A using Illuminant C, at an observer angle of 2 degrees).
Embodiment 12 is a polymer interlayer including any of the features of embodiments 1 to 11, wherein the polymer interlayer has at least two different glass transition temperatures (T_{g}) and the difference between the at least two different glass transition temperatures (T_{g}) is at least 3ºC.
Embodiment 13 is a polymer interlayer including any of the features of embodiments 1 to 12, wherein the polymer interlayer has at least two different glass transition temperatures (T_{g}) and the difference between at least two different glass transition temperatures (T_{g}) is at least 5ºC.
Embodiment 14 is a polymer interlayer including any of the features of embodiments 1 to 13, wherein the residual hydroxyl content of the third poly(vinyl butyral resin) is the same as the residual hydroxyl content of the first poly(vinyl butyral resin) or the second poly(vinyl butyral resin).
Embodiment 15 is a polymer interlayer including any of the features of embodiments 1 to 14, wherein the difference between the first residual hydroxyl content and the second residual hydroxyl content is at least 4.0 weight percent.
Embodiment 16 is a polymer interlayer including any of the features of embodiments 1 to 15, wherein the difference between the first residual hydroxyl content and the second residual hydroxyl content is at least 6.0 weight percent.
Embodiment 17 is a multiple layer glass panel including the polymer interlayer of any of embodiments 1 to 16.
Embodiment 18 is a multiple layer glass panel comprising: a first glass panel; a polymer interlayer including any of the features of embodiments 1 to 16, a second glass panel, wherein the polymer interlayer is disposed between the first and second glass panels.

### EXAMPLES

Exemplary core layers of the present disclosure (designated as "Disclosed Layers" and as shown as DL 1-8 in Table 1 below) and control or comparative core layers (designated as "Comparative Layers" and as shown as CL 1-2 in Table 1 below) were produced by mixing and melt-extruding 100 parts poly(vinyl butyral) resins and various amounts of plasticizer, and other common additives (as described above), as shown in Table 1. The core layers depicted in Table 1 were then used to construct various multilayered interlayers as shown in Table 2 and Table 3 and as described more fully below.

The improvements (or reduction) in iceflower defect formation in a multilayer interlayer can be most readily appreciated by a comparison of multilayer (trilayer) interlayers having a blend of two resins of different residual hydroxyl content and at least one plasticizer in the core layer (designated as "Disclosed Interlayers") to a multilayer interlayer having a core layer formed from only a single resin (of a fixed residual hydroxyl content) and at least one plasticizer in the core layer (designated as "Comparative Interlayers"). The Comparative Interlayers are shown as CI-1 to CI-4, and the Disclosed Interlayers are shown as DI-1 to DI-16 in Table 2 and Table 3. These Examples demonstrate that iceflower defects can be significantly reduced or completely eliminated when at least two PVB resins having differing residual hydroxyl contents are used in the core layer, such as when a second PVB resin having a higher residual hydroxyl content is added to (or combined with) a first PVB resin having a lower residual hydroxyl level the core layer.

Additional Comparative Layers and Disclosed Layers are depicted in Table 4. The Examples in Table 4 demonstrate that when a second PVB resin having a different (or higher) residual hydroxyl content is added to a layer having a first PVB resin, the resulting haze (from the addition of the second PVB resin) can be reduced or minimized when a high refractive index plasticizer(s) is used instead of a conventional plasticizer.

The resins used in the Tables below are PVB resins having residual hydroxyl contents and vinyl acetate residues as follows:
Resin-A: about 10-11 wt.% residual hydroxyl content and a vinyl acetate residue of 2%.
Resin-B: about 16 wt.% residual hydroxyl content and a vinyl acetate residue of 2%.
Resin-C: about 18-19 wt.% residual hydroxyl content and a vinyl acetate residue of 2%.
Resin-D: about 21-22 wt.% residual hydroxyl content and a vinyl acetate residue of 2%.

The poly(vinyl butyral) resin used in the skin layer in the Examples had about 18-19 wt.% residual hydroxyl content (Resin-C). For the core layers shown in Table 1, the first poly(vinyl butyral) resin used in the core layer had about 10-11 wt.% residual hydroxyl content (Resin-A), and the second resin used in the core layer varied (Resin-B, Resin-C or Resin-D) as shown in

Table 1. Core layers were produced according to the above procedure using a combination of first and second PVB resins having different residual hydroxyl contents and a plasticizer (either a conventional plasticizer (3GEH, RI = 1.442 at 25°C) or a high refractive index plasticizer (isodecyl benzoate, RI = 1.490 at 25°C)), as indicated in Table 1 below.

**Table 1**

| Core Layer | Resin-A (parts, wt) | Resin-B (parts, wt) | Resin-C (parts, wt) | Resin-D (parts, wt) | Plasticizer (3GEH) Content in PVB (phr) | Plasticizer (isodecyl benzoate) Content in PVB (phr) | Tg of plasticized Resin-A (°C) | Tg of plasticized second Resin (°C) |
|---|---|---|---|---|---|---|---|---|
| CL-1 | 100 | | | | 75 | | -3 | - |
| DL-1 | 95 | | 5 | | 73 | | -3 | 30 |
| DL-2 | 90 | | 10 | | 71 | | -3 | 30 |
| DL-3 | 80 | | 20 | | 68 | | -3 | 30 |
| DL-4 | 65 | | 35 | | 62 | | -3 | 30 |
| DL-5 | 85 | 15 | | | 75 | | -3 | 17 |
| DL-6 | 70 | 30 | | | 75 | | -4 | 16 |
| DL-7 | 55 | 45 | | | 75 | | -5 | 15 |
| CL-2 | 100 | | | | | 78 | -2 | - |
| DL-8 | 95 | | | 5 | | 78 | -2 | 37 |

As shown in Table 1, core layers DL-1 through DL-4 contain a first resin (Resin-A, having residual hydroxyl content of about 10-11 wt.%), a second resin (Resin-C, having a residual hydroxyl content of 18-19 wt.%) in amounts varying from 5 to 35 wt.%, and a conventional plasticizer (3GEH) at levels of 62 to 73 phr. Core layer CL-1 is a control or comparative example having only a first resin (Resin-A) and 75 phr conventional plasticizer (3GEH). Core layers DL-5 to DL-7 contain a first resin (Resin-A, having residual hydroxyl content of about 10-11 wt.%), a second resin (Resin-B, having a residual hydroxyl content of about 16 wt.%) in amounts varying from 15 to 45 wt.%, and a conventional plasticizer (3GEH) at a level of 75 phr. Core layer CL-2 has only a first resin (Resin-A) and 78 phr high refractive index plasticizer (isodecyl benzoate). Core layer DL-8 contains a first resin (Resin-A, having residual hydroxyl content of about 10-11 wt.%), a second resin (Resin-D, having a residual hydroxyl content of about 21-22 wt.%) and a high refractive index plasticizer (isodecyl benzoate) at a level of 78 phr.

As shown in Table 1, the plasticizer level is gradually reduced from 73 phr to 62 phr in core layers DL-1 to DL-4 to account for the plasticizer partitioning between the skin and the core layers as the amount of the second resin is increased. For core layers DL-5 to DL-7, the plasticizer level was held constant at 75 phr. The T_{g} of the plasticized Resin-A was -3ºC for DL-1 to DL-4, -3 to -5ºC for DL-5 to DL-7, and for DL-8 it was -2ºC.

The core layers of Table 1 were then used in multiple layer (trilayer) interlayers as shown in Table 2 below to produce control or comparative interlayers CI-1 to CI-4 and disclosed interlayers DI-1 to DI-16 according the present invention.

The disclosed interlayers DI-1 through DI-12 were all produced using core layers DL-1 to DL-4 (from Table 1), which comprise Resin-A (10-11 wt.% residual hydroxyl content) and a second resin, Resin-C (18-19 wt.% residual hydroxyl content), in varying amounts (as shown in Table 1). Resin-C was used to produce the skin layers. The residual hydroxyl content of the second resin was about 7 to 9 wt.% higher than that of the first resin (and the same as the skin layer resin).

In CI-1 to CI-3 and DI-1 to DI-12, the first resin in the core layer had a plasticizer content of 75 phr, and the second resin in the core layer had a plasticizer content of 38 phr (which is the same amount as in the skin layer of the samples). The core layer thickness ranged from 0.13 mm to 0.51 mm in samples CI-1 to CI-3 and DI-1 to DI-12.

Disclosed interlayers DI-13 though DI-15 were produced using core layers DL-5 to DL-7 (respectively, from Table 1) which comprise Resin-A (10-11 wt.% residual hydroxyl content) and a second resin, Resin-B (16 wt.% residual hydroxyl content), in varying amounts (as shown in Table 1). The residual hydroxyl content of the second resin was about 5 to 6 wt.% higher than that of the first resin and about 3 wt.% lower than that of the resin used in the skin layer. The core layer thickness was 0.13 mm (5 mils). Due to plasticizer partitioning between the first and the second resins in the core layer and between the resins in the core layer and the resin in the skin layers, a new equilibria in the plasticizer partitioning between these resins was reached. At equilibrium, the first resin in the core had about 77 to 81 phr plasticizer (which is higher than the 75 phr plasticizer level in the control sample, CI-3); the second resin in the core had about 50 phr plasticizer and the skin layer resin had about 38 to 39 phr plasticizer.

The disclosed interlayer DI-16 was produced using core layer DL-8 (from Table 1) which comprised Resin-A (10-11 wt.% residual hydroxyl content) and a second resin, Resin-D (21-22 wt.% residual hydroxyl content). Core layer DL-8 contained 5 wt.% of a Resin-D, which is 11 to 12 wt.% higher than the first resin and 3 to 4 wt.% higher than the skin layer resin, and a high refractive index plasticizer. The plasticizer partitioning between the first resin (Resin-A) and the skin resin (Resin-C) in DI-16 is the same as in the comparative interlayer CI-4, which has 100% of Resin-A in the core layer. The plasticizer partitioning between the first and the second core layer resins and between the second resin and the skin layer resin are different from the comparative interlayer CI-4 because the second resin has a different residual hydroxyl content level.

**Table 2**

| Interlayer No. | Skin Layer Resin %OH content (wt.%) | Skin Layer Plasticizer content (phr) | Combined Thickness of Skin Layers (1 and 2) (mm) | Core Layer (from Table 1) | Core layer thicknes s (mm) | Final plasticizer content in skin layer (phr) | Final plasticizer content in core layer first Resin (phr) | Final plasticizer content in core layer second Resin (phr) | Tg of plasticized first resin in core layer (°C) | Tg of plasticized second resin in core layer (°C) |
|---|---|---|---|---|---|---|---|---|---|---|
| CI-1 | 19 | 38 | 0.33 | CL-1 | 0.51 | 38 | 75 | - | -3 | - |
| DI-1 | 19 | 38 | 0.33 | DL-1 | 0.51 | 38 | 75 | 38 | -3 | 30 |
| DI-2 | 19 | 38 | 0.33 | DL-2 | 0.51 | 38 | 75 | 38 | -3 | 30 |
| DI-3 | 19 | 38 | 0.33 | DL-3 | 0.51 | 38 | 75 | 38 | -3 | 30 |
| DI-4 | 19 | 38 | 0.33 | DL-4 | 0.51 | 38 | 75 | 38 | -3 | 30 |
| CI-2 | 19 | 38 | 0.58 | CL-1 | 0.26 | 38 | 75 | - | -3 | 30 |
| DI-5 | 19 | 38 | 0.58 | DL-1 | 0.26 | 38 | 75 | 38 | -3 | 30 |
| DI-6 | 19 | 38 | 0.58 | DL-2 | 0.26 | 38 | 75 | 38 | -3 | 30 |
| DI-7 | 19 | 38 | 0.58 | DL-3 | 0.26 | 38 | 75 | 38 | -3 | 30 |
| DI-8 | 19 | 38 | 0.58 | DL-4 | 0.26 | 38 | 75 | 38 | -3 | 30 |
| CI-3 | 19 | 38 | 0.71 | CL-1 | 0.13 | 38 | 75 | - | -3 | - |
| DI-9 | 19 | 38 | 0.71 | DL-1 | 0.13 | 38 | 75 | 38 | -3 | 30 |
| DI-10 | 19 | 38 | 0.71 | DL-2 | 0.13 | 38 | 75 | 38 | -3 | 30 |
| DI-11 | 19 | 38 | 0.71 | DL-3 | 0.13 | 38 | 75 | 38 | -3 | 30 |
| DI-12 | 19 | 38 | 0.71 | DL-4 | 0.13 | 38 | 75 | 38 | -3 | 30 |
| DI-13 | 19 | 38 | 0.71 | DL-5 | 0.13 | 38 | 77 | 49 | -3 | 19 |
| DI-14 | 19 | 38 | 0.71 | DL-6 | 0.13 | 39 | 80 | 49 | -3 | 19 |
| DI-15 | 19 | 38 | 0.71 | DL-7 | 0.13 | 39 | 81 | 50 | -3 | 19 |
| CI-4 | 19 | 39 | 0.71 | CL-2 | 0.13 | 39 | 78 | - | -2 | - |
| DI-16 | 19 | 39 | 0.71 | DL-8 | 0.13 | 39 | 78 | 34 | -2 | 37 |

The exemplary multilayered interlayers DI-1 to DI-16 and the comparative multilayered interlayers CI-1 to CI-4 in Table 2 can be compared to show the improvement of the multilayered interlayers of the present invention in resisting iceflower defect formation when the multilayered interlayers are used in multilayer laminate glass panels. As noted above, the core layers depicted in Table 1 were used to construct various multilayered interlayers as shown in Table 2, with the resultant multilayered interlayer used to construct laminates as shown in Table 3. The multilayered interlayers have a general construction of skin layer/core layer/skin layer. The total thickness of each of the interlayers used is 0.84 mm. The laminates in Table 3 were each made with two (2) pieces of 2.3 mm clear glass, the interlayer (as shown in Table 3) and a 0.13-mm PET film ring in the center, as described above, along with the interlayer from Table 2 as shown in Table 3. The laminates were then nip rolled for de-airing. The average surface roughness (Rz) for the random rough surface interlayers was approximately 36 microns. The laminates were then tested to determine the amount (measured as the % area) of iceflower defects, damping loss factor (η) at 20ºC, %Tᵥᵢₛ, %Haze and Sound Transmission Loss (STL, at the reference frequency of 3150 Hz, in dB). Results are shown in Table 3.

**Table 3**

| Interlayer No. | Core Layer (from Table 1) | Core layer thickness (mm) | Hydroxyl content of the second resin (wt.%) | Type of plasticizer in the interlayer | Area of Iceflower Defect (%) | Damping Loss Factor at 20°C | Tᵥᵢₛ (%) | Haze (%) | STL at Reference frequency 3,150 Hz (dB) |
|---|---|---|---|---|---|---|---|---|---|
| CI-1 | CL-1 | 0.51 | - | 3GEH | 18 | 0.38 | 88 | 0.3 | 40 |
| DI-1 | DL-1 | 0.51 | 19 | 3GEH | 14 | 0.37 | 86 | 2.1 | N.T. |
| DI-2 | DL-2 | 0.51 | 19 | 3GEH | 6 | 0.38 | 85 | 4.7 | 40 |
| DI-3 | DL-3 | 0.51 | 19 | 3GEH | 2 | 0.40 | 84 | 16 | N.T. |
| DI-4 | DL-4 | 0.51 | 19 | 3GEH | 0 | 0.30 | 83 | 34 | 40 |
| CI-2 | CL-1 | 0.26 | - | 3GEH | 20 | 0.41 | 88 | 0.3 | 40 |
| DI-5 | DL-1 | 0.26 | 19 | 3GEH | 18 | 0.41 | 88 | 0.8 | N.T. |
| DI-6 | DL-2 | 0.26 | 19 | 3GEH | 10 | 0.42 | 87 | 2.1 | 40 |
| DI-7 | DL-3 | 0.26 | 19 | 3GEH | 4 | 0.36 | 85 | 8.3 | N.T |
| DI-8 | DL-4 | 0.26 | 19 | 3GEH | 0 | 0.25 | 87 | 18 | 39 |
| CI-3 | CL-1 | 0.13 | - | 3GEH | 35 | 0.36 | 88 | 0.3 | 40 |
| DI-9 | DL-1 | 0.13 | 19 | 3GEH | 25 | 0.35 | 88 | 0.4 | N.T. |
| DI-10 | DL-2 | 0.13 | 19 | 3GEH | 10 | 0.31 | 87 | 0.7 | 40 |
| DI-11 | DL-3 | 0.13 | 19 | 3GEH | 6 | 0.29 | 87 | 3 | N.T. |
| DI-12 | DL-4 | 0.13 | 19 | 3GEH | 0 | 0.16 | 87 | 7.5 | 38 |
| DI-13 | DL-5 | 0.13 | 16 | 3GEH | 0.13 | N.T. | N.T. | N.T. | N.T. |
| DI-14 | DL-6 | 0.13 | 16 | 3GEH | 0.13 | N.T. | N.T. | N.T. | N.T. |
| DI-15 | DL-7 | 0.13 | 16 | 3GEH | 0.13 | N.T. | N.T. | N.T. | N.T. |
| CI-4 | CL-2 | 0.13 | - | Isodecyl benzoate | 30 | 0.36 | 88 | 0.3 | 40 |
| DI-16 | DL-8 | 0.13 | 21.0 | Isodecyl benzoate | 5 | 0.35 | 88 | 0.3 | 40 |

| | | | | | | | | | |
|---|---|---|---|---|---|---|---|---|---|
| N.T. = not tested | | | | | | | | | |

Table 3 demonstrates that adding a second resin having higher residual hydroxyl content to a first resin (having a lower residual hydroxyl content) to produce the core layer in the multilayer interlayer results in a significant reduction or even elimination of iceflower defect formation regardless of the core layer thickness. The reduction in iceflower defect formation correlates with the residual hydroxyl content of the second resin. For example, when the second resin has a residual hydroxyl content of 18-19 wt.% (Resin-C), the iceflower defect is eliminated when this resin is present at 35 wt.%. When the second resin has a residual hydroxyl content of 16 wt.%, the iceflower defect can be eliminated when the second resin is present at 45 wt.%. Stated differently, the iceflower defect can be eliminated but more of the second resin at the lower residual hydroxyl level is necessary than the amount needed of the resin at the higher residual hydroxyl level.

The effectiveness of the second resin to reduce or eliminate iceflower defects is further shown by comparing the area of iceflower defects in laminates having the same core layer with different core layer thicknesses. For example, comparing DI-1, DI-5 and DI-9, which all have 5 wt.% of the Resin-C, as the core layer thickness decreases, the area of iceflower defects increases. But as the amount of Resin-C increases, the level of iceflower defects is reduced. At 35 wt.% Resin-C, the iceflower defects are completely eliminated at all three core thicknesses.

All interlayers showed high acoustic damping performance (expressed as damping loss factor (η) at 20ºC) and sound insulation (expressed as STL at reference frequency of 3,150 Hz). As the core layer is modified and the core layer thickness is varied, the acoustic damping and sound insulation performance also varied. For example, at thicker core levels of 0.51 mm, the damping loss factor (η) and STL were fairly consistent (or essentially unchanged) at between 0.37 and 0.40 and 40 dB in cores having from 5 to 20 wt.% of Resin-C, while at core thicknesses of only 0.13 mm, the damping loss factor (η) was between 0.29 and 0.35 and STL was between 38 to 40 dB in cores having from 5 to 20 wt.% of Resin-C. At levels of 35 wt.% of the second resin, Resin-C, the damping loss factor (η) decreased slightly at all thicknesses and STL was fairly consistent. As shown by the data in Table 3, the acoustic performance (damping loss factor (η)) is strongly dependent on the core layer thickness, and increasing core layer thickness improves the acoustic performance (increases the damping loss factor (η)).

By adjusting the core thickness, the level of the second PVB resin in the core, and the residual hydroxyl contents of the resins in the skin and core layers, it is possible to design and produce a multilayer interlayer having improved properties (such as reduced levels of iceflower defects) without affecting its acoustic performance or damping loss factor. For example, CI-3 and DI-11 (0.13 mm (5 mils) core layer) have 0 and 20 wt.% of the second resin, Resin-C, respectively, and damping loss factor (η) of 0.36 and 0.29. Increasing the core layer thickness from 0.13 mm (5 mils) to 0.26 mm (10 mils) while keeping the level of the second resin, Resin-C, at 20 wt.%, increases the damping loss factor from 0.29 (DI-11) to 0.36 (DI-7). By increasing the core layer thickness the same acoustic performance (or damping loss factor (η)) can be achieved for the same resin blend composition. Adding only 5 wt.% of a second, higher residual hydroxyl content PVB resin to the core layer provided a significant reduction in iceflower defect formation without adversely or negatively affecting acoustic damping performance. Therefore, it is possible that an interlayer can be modified by adding to the core layer a PVB resin having a higher residual hydroxyl level to significantly reduce or eliminate iceflower defects without adversely affecting its damping loss factor.

Interlayers CI-4 and DI-16 are plasticized with a high refractive index plasticizer instead of the conventional plasticizer, 3GEH. By adding 5 wt.% of a second resin, Resin-D, to the core layer, the haze level is not adversely affected, as shown by the %Tᵥᵢₛ and %Haze, which were unchanged as 5% of the second resin was added to the core layer. Using the conventional plasticizer (having a lower refractive index) when blending the two resins in the core produced interlayers having increasing levels of haze as the second resin was added. For example, adding 5 wt.% of Resin-C to the core layer and using 3GEH as the plasticizer increased the %Haze from 0.3 for CI-1 to 2.1 for DI-1, from 0.3 for CI-2 to 0.8 for DI-5, and from 0.3 for CI-3 to 0.4 for DI-9. As the amount of resin increased, the %Haze increased. The %Tᵥᵢₛ decreased slightly at higher levels of the second resin at all core thicknesses.

As the plasticizer content was reduced in core layers DL-1 to DL-4 (from 73 phr to 62 phr), the plasticizer content in the first resin remained at 75 phr and the plasticizer partitions between the first PVB resin in the core layer and the resin in the skin layer (as shown in Table 2) to be the same as in the control or comparative interlayers CI-1, CI-2, and CI-3. The plasticizer content in the second resin was about 38 phr.

Core layers DL-5 to DL-7 contain a second resin (Resin-B having a residual hydroxyl content of 16 wt.%) at levels of 15, 30 and 45 wt.% respectively, and a plasticizer content of 75 phr. Because of the plasticizer partitioning between the first and second resins in the core, the plasticizer content in the first resin is more than 75 phr and the plasticizer content in the second resin is less than 75 phr. As core layers DL-5 to DL-7 are combined with skin layers (as shown in Table 2), there was a further plasticizer partitioning between the skin layers and the core layer, resulting in plasticizer contents in the skin layers and in the core layer that are different from the amounts originally added.

Core layer CL-2 consists of only a single resin and a high refractive index plasticizer (isodecyl benzoate, refractive index = 1.490 at 25°C), and core layer DL-8 consists of a blend of Resin-A (having a residual hydroxyl content of 10-11 wt.%) and Resin-D (having a residual hydroxyl content of 21-22 wt.%), combined with a high refractive index plasticizer (isodecyl benzoate).

Additional Comparative Layers (C0 to C5) and Disclosed Layers (D0 to D5) are depicted in Table 4. The Examples in Table 4 further demonstrate that when a second PVB resin having a different (or higher) residual hydroxyl content is added to a layer (such as a core layer) having a first PVB resin, the resulting haze which forms with the addition of the second, different PVB resin can be reduced or minimized when a high refractive index plasticizer(s) is used instead of a conventional (i.e., lower refractive index) plasticizer. Interlayers were produced as described above. Thickness of the interlayers was 0.76 mm. Refractive Index, %Tᵥᵢₛ and %Haze were measured, and results are shown in Table 4 below.

**Table 4**

| Sample | Resin-D (parts, wt) | Resin-A (parts, wt) | Plasticizer (3GEH) Content (phr) | Plasticizer (Blend* Content (phr) | Refractive Index | Tᵥᵢₛ (%) | Haze (%) |
|---|---|---|---|---|---|---|---|
| C0 | 100 | 0 | 75 | 0 | 1.467 | 88 | 1.0 |
| C1 | 95 | 5 | 73 | 0 | 1.467 | 77 | 44 |
| C2 | 90 | 10 | 71 | 0 | 1.467 | 75 | 85 |
| C3 | 80 | 20 | 68 | 0 | 1.468 | 80 | 90 |
| C4 | 70 | 30 | 64 | 0 | 1.469 | 81 | 95 |
| C5 | 60 | 40 | 60 | 0 | 1.469 | 82 | 92 |
| D0 | 100 | 0 | 0 | 75 | 1.496 | 88 | 1.0 |
| D1 | 95 | 5 | 0 | 73 | 1.496 | 88 | 1.0 |
| D2 | 90 | 10 | 0 | 71 | 1.496 | 89 | 1.9 |
| D3 | 80 | 20 | 0 | 68 | 1.496 | 88 | 3.1 |
| D4 | 70 | 30 | 0 | 64 | 1.497 | 88 | 3.8 |
| D5 | 60 | 40 | 0 | 60 | 1.497 | 88 | 2.4 |

As shown in Table 4, as the amount of the second resin in the comparative layers (C0 to C5), which were produced using a conventional plasticizer having a lower refractive index (RI of about 1.442 at 25ºC), increased from 0 to 40 wt.%, the %Haze significantly increased (from 1.0 with only one resin to a high of 95) and the %Tᵥᵢₛ was reduced. In the disclosed interlayers (D0 to D5), which were produced using a plasticizer blend having a higher refractive index (RI = 1.513 at 25ºC), as the amount of the second resin increased, %Haze increased much less, from 1.0 with only one resin to a high of 3.8, and the %Tᵥᵢₛ remained essentially the same (at about 88%).

In conclusion, the multilayered interlayers with core layers described herein have numerous advantages over conventional multilayered interlayers previously utilized in the art. In general, in comparison to multilayered interlayers previously utilized in the art, the multilayered interlayers comprising core layers as described herein have an increased resistance to the formation of iceflower defects common in multiple layer panels without sacrificing other properties, such as acoustic performance or optical properties (such as %Haze and %Tᵥᵢₛ). Other advantages will be readily apparent to those skilled in the art.

While the invention has been disclosed in conjunction with a description of certain embodiments, including those that are currently believed to be the preferred embodiments, the detailed description is intended to be illustrative and should not be understood to limit the scope of the present disclosure. As would be understood by one of ordinary skill in the art, embodiments other than those described in detail herein are encompassed by the present invention. Modifications and variations of the described embodiments may be made without departing from the spirit and scope of the invention.

It will further be understood that any of the ranges, values, or characteristics given for any single component of the present disclosure can be used interchangeably with any ranges, values or characteristics given for any of the other components of the disclosure, where compatible, to form an embodiment having defined values for each of the components, as given herein throughout. For example, an interlayer can be formed comprising poly(vinyl butyral) having a residual hydroxyl content in any of the ranges given in addition to comprising a plasticizers in any of the ranges given to form many permutations that are within the scope of the present disclosure, but that would be cumbersome to list. Further, ranges provided for a genus or a category, such as phthalates or benzoates, can also be applied to species within the genus or members of the category, such as dioctyl terephthalate, unless otherwise noted.

## Claims

1. A polymer interlayer that resists formation of iceflower defects, the polymer interlayer comprising:
at least one soft layer wherein the soft layer comprises:
a first poly(vinyl butyral) resin having a first residual hydroxyl content as measured in weight percent according to ASTM D1396;
a second poly(vinyl butyral) resin having a second residual hydroxyl content as measured in weight percent according to ASTM D1396; wherein the difference between the first residual hydroxyl content and the second residual hydroxyl content is at least 2.0 weight percent;
and a high refractive index plasticizer having a refractive index measured according to ASTM D542 of at least 1.460;
at least one stiffer layer comprising a third poly(vinyl butyral resin) having a third residual hydroxyl content;
and a plasticizer,
wherein the polymer interlayer has a damping loss factor (η) (as measured by ISO 16940) of at least 0.15, a percent haze of less than 1.0% (as measured by a hazemeter in accordance with ASTM D1003-61 (Re-approved 1977)-Procedure A using Illuminant C, at an observer angle of 2 degrees).

2. A polymer interlayer according to claim 1, wherein in the soft layer the at least one plasticizer having a refractive index of at least 1.460 is selected from dipropylene glycol dibenzoate, tripropylene glycol dibenzoate, polypropylene glycol dibenzoate, isodecyl benzoate, 2-ethylhexyl benzoate, diethylene glycol benzoate, butoxyethyl benzoate, butoxyethyoxyethyl benzoate, butoxyethoxyethoxyethyl benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluate, triethylene glycol di-o-toluate, dipropylene glycol di-o-toluate, 1,2-octyl dibenzoate, tri-2-ethylhexyl trimellitate, di-2-ethylhexyl terephthalate, bis-phenol A bis(2-ethylhexaonate), di-(butoxyethyl) terephthalate, di-(butoxyethyoxyethyl) terephthalate, and mixtures thereof.

3. A polymer interlayer including any of the features of claims 1 to 2, wherein the second poly(vinyl butyral) resin is present in an amount of from 5 weight percent to 45 weight percent.

4. A polymer interlayer including any of the features of claims 1 to 3, wherein the second poly(vinyl butyral) resin is present in an amount of from 10 weight percent to 40 weight percent.

5. A polymer interlayer including any of the features of claims 1 to 4, wherein the soft layer of the polymer interlayer has at least one glass transition temperature (T_{g}) less than 15°C.

6. A polymer interlayer including any of the features of claims 1 to 5, wherein the plasticizer is a mix of two or more plasticizers.

7. A polymer interlayer including any of the features of claims 1 to 6, further comprising a second high refractive index plasticizer having a refractive index of at least 1.460.

8. A polymer interlayer including any of the features of claims 1 to 7, wherein the polymer interlayer further comprises a plasticizer having a refractive index of less than 1.450.

9. A polymer interlayer including any of the features of claims 1 to 8, wherein the percent haze is less than 0.5% (as measured by ASTM D1003-61 (Re-approved 1977)-Procedure A using Illuminant C, at an observer angle of 2 degrees).

10. A polymer interlayer including any of the features of claims 1 to 9, wherein the polymer interlayer has at least two different glass transition temperatures (T_{g}) and the difference between the at least two different glass transition temperatures (T_{g}) is at least 3°C.

11. A polymer interlayer including any of the features of claims 1 to 10, wherein the polymer interlayer has at least two different glass transition temperatures (T_{g}) and the difference between at least two different glass transition temperatures (T_{g}) is at least 5°C.

12. A polymer interlayer including any of the features of claims 1 to 11, wherein the residual hydroxyl content of the third poly(vinyl butyral resin) is the same as the residual hydroxyl content of the first poly(vinyl butyral resin) or the second poly(vinyl butyral resin).

13. A polymer interlayer including any of the features of claims 1 to 12, wherein the difference between the first residual hydroxyl content and the second residual hydroxyl content is at least 4.0 weight percent.

14. A multiple layer glass panel including the polymer interlayer of any of claims 1 to 13.

## Patentansprüche

1. Polymerzwischenschicht, die der Ausbildung von Eisblumendefekten widersteht, wobei die Polymerzwischenschicht umfasst:
mindestens eine weiche Schicht, wobei die weiche Schicht umfasst:
ein erstes Polyvinylbutyralharz mit einem ersten Rest-Hydroxylgehalt, wie gemessen in Gewichtsprozent gemäß ASTM D1396;
ein zweites Polyvinylbutyralharz mit einem zweiten Rest-Hydroxylgehalt, wie gemessen in Gewichtsprozent gemäß ASTM D1396;
wobei die Differenz zwischen dem ersten Rest-Hydroxylgehalt und dem zweiten Rest-Hydroxylgehalt mindestens 2,0 Gewichtsprozent beträgt;
und einen Weichmacher mit hohem Brechungsindex mit einem Brechungsindex, gemessen gemäß ASTM D542, von mindestens 1,460;
und mindestens eine steifere Schicht, umfassend ein drittes Polyvinylbutyralharz mit einem dritten Rest-Hydroxylgehalt;
und einen Weichmacher,
wobei die Polymerzwischenschicht einen Dämpfungsverlustfaktor (η) (wie gemessen durch ISO 16940) von mindestens 0,15, eine prozentuale Trübung von weniger als 1,0% (wie gemessen durch ein Trübungsmessgerät gemäß ASTM D1003-61 (erneut genehmigt 1977)-Verfahren A unter Verwendung von Beleuchtungsmittel C, bei einem Beobachtungswinkel von 2 Grad) aufweist.

2. Polymerzwischenschicht nach Anspruch 1, wobei in der weichen Schicht der mindestens eine Weichmacher mit einem Brechungsindex von mindestens 1,460 ausgewählt ist aus Dipropylenglycoldibenzoat, Tripropylenglycoldibenzoat, Polypropylenglycoldibenzoat, Isodecylbenzoat, 2-Ethylhexylbenzoat, Diethylenglycolbenzoat, Butoxyethylbenzoat, Butoxyethyoxyethylbenzoat, Butoxyethoxyethoxyethylbenzoat, Propylenglycoldibenzoat, 2,2,4-Trimethyl-1,3-pentandioldibenzoat, 2,2,4-Trimethyl-1,3-pentandiolbenzoatisobutyrat, 1,3-Butandioldibenzoat, Diethylenglycoldi-o-toluat, Triethylenglycoldi-o-toluat, Dipropylenglycoldi-o-toluat, 1,2-Octyldibenzoat, Tri-2-ethylhexyltrimellitat, Di-2-ethylhexylterephthalat, Bis-phenol-A-bis(2-ethylhexaonat), Di-(butoxyethyl)-terephthalat, Di-(butoxyethyoxyethyl)-terephthalat und Gemischen davon.

3. Polymerzwischenschicht, enthaltend eines der Merkmale von Anspruch 1 bis 2, wobei das zweite Polyvinylbutyralharz vorhanden ist in einer Menge von 5 Gewichtsprozent bis 45 Gewichtsprozent.

4. Polymerzwischenschicht, enthaltend eines der Merkmale von Anspruch 1 bis 3, wobei das zweite Polyvinylbutyralharz vorhanden ist in einer Menge von 10 Gewichtsprozent bis 40 Gewichtsprozent.

5. Polymerzwischenschicht, enthaltend eines der Merkmale von Anspruch 1 bis 4, wobei die weiche Schicht der Polymerzwischenschicht mindestens eine Glasübergangstemperatur (T_{g}) kleiner als 15°C aufweist.

6. Polymerzwischenschicht, enthaltend eines der Merkmale von Anspruch 1 bis 5, wobei der Weichmacher ein Gemisch von zwei oder mehr Weichmachern ist.

7. Polymerzwischenschicht, enthaltend eines der Merkmale von Anspruch 1 bis 6, des Weiteren umfassend einen zweiten Weichmacher mit hohem Brechungsindex mit einem Brechungsindex von mindestens 1,460.

8. Polymerzwischenschicht, enthaltend eines der Merkmale von Anspruch 1 bis 7, wobei die Polymerzwischenschicht des Weiteren umfasst: einen Weichmacher mit einem Brechungsindex von weniger als 1,450.

9. Polymerzwischenschicht, enthaltend eines der Merkmale von Anspruch 1 bis 8, wobei der prozentuale Trübungswert weniger ist als 0,5% (wie gemessen durch ASTM D1003-61 (erneut genehmigt 1977)-Verfahren A unter Verwendung von Beleuchtungsmittel C, bei einem Beobachtungswinkel von 2 Grad) aufweist.

10. Polymerzwischenschicht, enthaltend eines der Merkmale von Anspruch 1 bis 9, wobei die Polymerschicht wenigstens zwei verschiedene Glasübergangstemperaturen (T_{g}) hat und die Differenz zwischen den wenigstens zwei verschiedenen Glasübergangstemperaturen (T_{g}) wenigstens 3°C ist.

11. Polymerzwischenschicht, enthaltend eines der Merkmale von Anspruch 1 bis 10, wobei die Polymerzwischenschicht wenigstens zwei verschiedene Glasübergangstemperaturen (T_{g}) hat und die Differenz zwischen den wenigstens zwei verschiedenen Glasübergangstemperaturen (T_{g}) wenigstens 5°C ist.

12. Polymerzwischenschicht, enthaltend eines der Merkmale von Anspruch 1 bis 11, wobei der Rest-Hydroxylgehalt des dritten Poly(vinylbutyralharzes) derselbe ist wie der Rest-Hydroxylgehalt des ersten Poly(vinylbutyralharzes) oder des zweiten Poly(vinylbutyralharzes).

13. Polymerzwischenschicht, enthaltend eines der Merkmale von Anspruch 1 bis 12, wobei die Differenz zwischen dem ersten Rest-Hydroxylgehalt und dem zweiten Rest-Hydroxylgehalt wenigstens 4,0 Gewichtsprozent ist.

14. Mehrschichtige Glasscheibe, die die Polymerzwischenschicht nach einem der Ansprüche 1 bis 13 umfasst.

## Revendications

1. Couche intermédiaire polymère qui résiste à la formation de défauts de type fleur de glace, la couche intermédiaire polymère comprenant :
au moins une couche souple dans laquelle la couche souple comprend :
une première résine de poly(butyral de vinyle) présentant une première teneur en hydroxyle résiduel comme mesurée en pourcent en masse selon ASTM D1396 ;
une seconde résine de poly(butyral de vinyle) présentant une seconde teneur en hydroxyle résiduel comme mesurée en pourcent en masse selon ASTM D1396 ;
dans laquelle la différence entre la première teneur en hydroxyle résiduel et la seconde teneur en hydroxyle résiduel est d'au moins 2,0 pourcent en masse ;
et un plastifiant d'indice de réfraction élevé ayant un indice de réfraction mesuré selon ASTM D542 d'au moins 1,460 ;
au moins une couche plus rigide comprenant une troisième résine de poly(butyral de vinyle) présentant une troisième teneur en hydroxyle résiduel ;
et un plastifiant,
dans laquelle la couche intermédiaire polymère présente un facteur de perte d'amortissement (η) (comme mesuré par ISO 16940) d'au moins 0,15, un pourcentage de voile inférieur à 1,0 % (comme mesuré par un dispositif de mesure de voile selon la Procédure A ASTM D1003-61 (ré-approuvée en 1977) utilisant l'illuminant C, à un angle d'observateur de 2 degrés).

2. Couche intermédiaire polymère selon la revendication 1, dans laquelle dans la couche souple le au moins un plastifiant présentant un indice de réfraction d'au moins 1 460 est choisi parmi le dibenzoate de dipropylène glycol, dibenzoate de tripropylène glycol, dibenzoate de polypropylène glycol, benzoate d'isodécyle, benzoate de 2-éthylhexyle, benzoate de diéthylène glycol, benzoate de butoxyéthyle, benzoate de butoxyéthoxyéthyle, benzoate de butoxyéthoxyéthoxyéthyle, dibenzoate de propylène glycol, dibenzoate de 2,2,4-triméthyl-1,3-pentanediol, isobutyrate benzoate de 2,2,4-triméthyl-1,3-pentanediol, dibenzoate de 1,3-butanediol, di-o-toluate de diéthylène glycol, di-o-toluate de triéthylène glycol, di-o-toluate de dipropylène glycol, dibenzoate de 1,2-octyle, triméllitate de tri-2-éthylhexyle, téréphthalate de di-2-éthylhexyle, bis(2-éthylhexaonate) de bisphénol A, téréphthalate de di(butoxyéthyle), téréphthalate de di(butoxyéthoxyéthyle), et mélanges de ceux-ci.

3. Couche intermédiaire polymère comprenant l'un quelconque des aspects des revendications 1 à 2, dans laquelle la seconde résine de poly(butyral de vinyle) est présente dans une quantité de 5 pourcent en masse à 45 pourcent en masse.

4. Couche intermédiaire polymère comprenant l'un quelconque des aspects des revendications 1 à 3, dans laquelle la seconde résine de poly(butyral de vinyle) est présente dans une quantité de 10 pourcent en masse à 40 pourcent en masse.

5. Couche intermédiaire polymère comprenant l'un quelconque des aspects des revendications 1 à 4,
dans laquelle la couche souple de la couche intermédiaire polymère présente au moins une température de transition vitreuse (Tg) inférieure à 15°C.

6. Couche intermédiaire polymère comprenant l'un quelconque des aspects des revendications 1 à 5,
dans laquelle le plastifiant est un mélange de deux ou plusieurs plastifiants.

7. Couche intermédiaire polymère comprenant l'un quelconque des aspects des revendications 1 à 6, comprenant de plus un second plastifiant d'indice de réfraction élevé ayant un indice de réfraction d'au moins 1,460.

8. Couche intermédiaire polymère comprenant l'un quelconque des aspects des revendications 1 à 7,
dans laquelle la couche intermédiaire polymère comprend de plus un plastifiant ayant un indice de réfraction inférieur à 1,450.

9. Couche intermédiaire polymère comprenant l'un quelconque des aspects des revendications 1 à 8,
dans laquelle le pourcentage de voile est inférieur à 0,5 % (comme mesuré par la Procédure A ASTM D1003-61 (ré-approuvée en 1977) utilisant l'illuminant C, à un angle d'observateur de 2 degrés).

10. Couche intermédiaire polymère comprenant l'un quelconque des aspects des revendications 1 à 9,
dans laquelle la couche intermédiaire polymère présente au moins deux températures de transition vitreuse différentes (Tg) et la différence entre les au moins deux températures de transition vitreuse différentes (Tg) est d'au moins 3°C.

11. Couche intermédiaire polymère comprenant l'un quelconque des aspects des revendications 1 à 10,
dans laquelle la couche intermédiaire polymère présente au moins deux températures de transition vitreuse différentes (Tg) et la différence entre au moins deux températures de transition vitreuse différentes (Tg) est d'au moins 5°C.

12. Couche intermédiaire polymère comprenant l'un quelconque des aspects des revendications 1 à 11,
dans laquelle la teneur en hydroxyle résiduel de la troisième résine de poly(butyral de vinyle) est identique à la teneur en hydroxyle résiduel de la première résine de poly(butyral de vinyle) ou de la seconde résine de poly(butyral de vinyle).

13. Couche intermédiaire polymère comprenant l'un quelconque des aspects des revendications 1 à 12, dans laquelle la différence entre la première teneur en hydroxyle résiduel et la seconde teneur en hydroxyle résiduel est d'au moins 4,0 pourcent en masse.

14. Panneau de verre à couches multiples comprenant la couche intermédiaire polymère selon l'une quelconque des revendications 1 à 13.
